# EUROPEAN PATENT APPLICATION

(11) **EP 4 822 393 A1**
(43) Date of publication of application: **14.10.2026**
(21) Application number: 26171919.9
(22) Date of filing: 13.04.2026
(51) Int. Cl.: G01S 13/82, G01S 5/00, G01S 13/84, H04L 9/00, H04W 12/00

(54) **BLUETOOTH RANGING METHOD, INITIATOR, REFLECTOR, AND STORAGE MEDIUM**

(30) Priority: 11.04.2025 CN 202510461328
(71) Applicant: Telink Semiconductor (Shanghai) Co., Ltd., Shanghai 201203 (CN)
(72) Inventor: HUANG, Haili, Shanghai, 201203 (CN); LOU, Wenfeng, Shanghai, 201203 (CN); JIN, Haipeng, Shanghai, 201203 (CN)
(74) Representative: Manitz Finsterwald Patent- und Rechtsanwaltspartnerschaft mbB

(57) **Abstract**

A Bluetooth ranging method, an initiator, a reflector, and a storage medium. The method implemented by the initiator includes: mixing a single-tone signal with a first modulation signal to obtain a first intermediate signal; converting the first intermediate signal into a first analog signal; performing frequency conversion on the first analog signal to obtain a first continuous wave signal; transmitting the first continuous wave signal for a reflector to receive the first continuous wave signal and perform frequency conversion to obtain a first measurement value; receiving a second continuous wave signal from the reflector, and performs frequency conversion on the second continuous wave signal via a first digital mixer to obtain a second measurement value. The first digital mixer and the first modulation signal use the same signal source. This method can compensate for phase jumps caused by phase-locked loop frequency switching, thereby achieving more accurate Bluetooth ranging.

## Description

### TECHNICAL FIELD

The present disclosure relates to Bluetooth technologies, more particularly to a Bluetooth ranging method, an initiator, a reflector, and a storage medium.

### BACKGROUND

In current Bluetooth ranging methods, when an initiator or a reflector switches between a transmit (Tx) mode and a receive (Rx) mode, the resulting frequency switching of a phase-locked loop (PLL) causes a jump in a continuous wave signal, thereby causing a deviation of the measured distance from the actual distance between the initiator and the reflector, resulting in low measurement accuracy of the Bluetooth ranging apparatus.

Therefore, how to improve the measurement accuracy of the Bluetooth ranging apparatus is an urgent problem to be solved.

### SUMMARY

In view of the above problems existing in the prior art, a Bluetooth ranging method, an initiator, a reflector, and a storage medium are proposed to improve the measurement accuracy of the Bluetooth ranging apparatus.

The present disclosure provides the following solutions.

In a first aspect, a Bluetooth ranging method is provided. The method is applicable to an initiator of a Bluetooth ranging apparatus that further includes a reflector, and includes:
mixing, by the initiator, a single-tone signal with a first modulation signal to obtain a first intermediate signal;
converting, by the initiator via a digital-to-analog converter, the first intermediate signal into a first analog signal;
performing, by the initiator, frequency conversion on the first analog signal to obtain a first continuous wave signal;
transmitting, by the initiator, the first continuous wave signal to the reflector for the reflector to perform frequency conversion on the first continuous wave signal to obtain a first measurement value; and
receiving, by the initiator, a second continuous wave signal sent by the reflector, and performing frequency conversion on the second continuous wave signal via a first digital mixer to obtain a second measurement value, where a distance between the initiator and the reflector is determined using a product of the first measurement value and the second measurement value, and the first digital mixer and the first modulation signal use the same signal source.

In some possible embodiments, the initiator includes a low-intermediate-frequency transmitter and an initiator receiver, and the method further includes:
correcting, by the initiator, the product of the first measurement value and the second measurement value based on a preset value to obtain a corrected product, where the corrected product is used to determine the distance between the initiator and the reflector;
where the preset value is determined by the initiator receiver based on a test continuous wave signal received from the low-intermediate-frequency transmitter.

In some possible embodiments, the first continuous wave signal is expressed as exp(j(2π(Frx+Fif)(t-T1)+α+γ))=exp(j(2πFtx(t-T1)+α+γ)); and
the first measurement value is calculated as PCT1=exp(j(2πFtx(T1-T1)+α+γ-2πFtx(T2-T1)-β))=exp(j(α+γ-2πFtx(T2-T1)-β)),
where Frx denotes an operating frequency of a phase-locked loop of the initiator, Ftx denotes an operating frequency of a phase-locked loop of the reflector, Fif denotes a frequency of the first modulation signal, with Fif+Frx=Ftx, t denotes a time variable, T1 denotes a time when the initiator transmits the first continuous wave signal, T2 denotes a time when the reflector receives the first continuous wave signal, α denotes a phase of the initiator at time T1, γ denotes a phase of the first modulation signal at time T1, and β denotes a phase of the reflector at time T1.

In some possible embodiments, the second continuous wave signal is expressed as exp(j(β+2πFtx(t-T1))); and
the second measurement value is calculated as PCT2=exp(j(β+2πFtx(T5-T1)-α-2πFrx(T6-T1)-2πFif(T6-T4)-δ))=exp(j(β+2πFtx(T5-T6)+2πFif(T4-T1)-α-δ)),
where T4 denotes a time when the initiator switches to a receiving state, T5 denotes a time when the reflector starts to transmit the second continuous wave signal, T6 denotes a time when the initiator receives the second continuous wave signal, and δ denotes a phase of the first digital mixer of the initiator at time T4.

In some possible embodiments, the product of the first measurement value and the second measurement value is calculated as PCT1*PCT2=exp(j(α+γ-2πFtx(T2-T1)-β+β+2πFtx(T5-T6)+2πFif(T4-T1)-α-δ))=exp(j( -2πFtx(T2-T1+T6-T5)-δ+γ+2πFif(T4-T1))),
where each of T2-T1 and T6-T5 represents a time of flight corresponding to the distance, and -δ+γ+2πFif(T4-T1)=0.

In a second aspect, a Bluetooth ranging method is provided. The method is applicable to a reflector of a Bluetooth ranging apparatus that further includes an initiator, and includes:
receiving, by the reflector, a third continuous wave signal sent by the initiator, and performing frequency conversion on the third continuous wave signal via a second digital mixer to obtain a third measurement value;
mixing, by the reflector, a single-tone signal with a second modulation signal to obtain a second intermediate signal;
converting, by the reflector, the second intermediate signal into a second analog signal;
performing, by the reflector, frequency conversion on the second analog signal to obtain a fourth continuous wave signal; and
transmitting, by the reflector, the fourth continuous wave signal to the initiator for the initiator to perform frequency conversion on the fourth continuous wave signal to obtain a fourth measurement value, where a distance between the initiator and the reflector is determined using a product of the third measurement value and the fourth measurement value, and the second digital mixer and the second modulation signal use the same signal source.

In some possible embodiments, the reflector includes a reflector transmitter and a low-intermediate-frequency receiver, the method further includes:
correcting, by the reflector, the product of the third measurement value and the fourth measurement value based on a preset value to obtain a corrected product, where the corrected product is used to determine the distance between the initiator and the reflector;
where the preset value is determined by the low-intermediate-frequency receiver based on a test continuous wave signal received from the reflector transmitter.

In some possible embodiments, the third continuous wave signal is expressed as exp(j(2πFtx'(t-t1)+α')); and
the third measurement value PCT3 is calculated as PCT3=exp(j(2πFtx'(t1-t1)+α'-2πFrx'(t2-t1)-β'-2πFif'(t2-t2)-δ'))=exp(j(α'-2πFrx'(t2-t1) -β'-δ')),
where Ftx' denotes an operating frequency of a phase-locked loop of the initiator, Frx' denotes an operating frequency of a phase-locked loop of the reflector, Fit' denotes a frequency of the second modulation signal, with Fif+Frx'=Ftx', t denotes a time variable, t1 denotes a time when the initiator transmits the third continuous wave signal, t2 denotes a time when the reflector receives the third continuous wave signal, α' denotes a phase of the initiator at time t1, β' denotes a phase of the reflector at time t1, and δ' denotes a phase of the second digital mixer at time t2.

In some possible embodiments, the fourth continuous wave signal is expressed as exp(j(β'+2πFrx'(t-t1)+γ'+2πFif'(t-t5))); and
the fourth measurement value PCT4 is calculated as PCT4=exp(j(β'+2πFrx'(t5-t1)+γ'-2πFtx'(t6-t1)-α')),
where t5 denotes a time when the reflector starts to transmit the fourth continuous wave signal, t6 denotes a time when the initiator receives the fourth continuous wave signal, and γ' denotes a phase of the second modulation signal at time t5.

In some possible embodiments, the product of the third measurement value and the fourth measurement value is calculated as PCT3*PCT4=exp(j(β'+2πFrx'(t5-t1)+γ'-2πFtx'(t6-t1)-α'+α'-2πFrx'(t2-t1)-β'-δ'))=exp(j (2πFtx'(t5-t1)-2πFif'(t5-t1)+γ'-2πFtx'(t6-t1)-2πFtx'(t2-t1)+2πFif'(t2-t1)-δ'))=exp(j(-2 πFtx'(t6-t5+t2-t1)-2πFif(t5-t2)+γ'-δ')),
where each of t2-t1 and t6-t5 represents a time of flight corresponding to the distance, and -δ'+γ'-2πFif'(t5-t2)=0.

In a third aspect, an initiator is provided, applicable to a Bluetooth ranging apparatus that further includes a reflector.

The initiator is configured to mix a single-tone signal with a first modulation signal to obtain a first intermediate signal;
the initiator is configured to convert, via a digital-to-analog converter, the first intermediate signal into a first analog signal;
the initiator is configured to perform frequency conversion on the first analog signal to obtain a first continuous wave signal;
the initiator is configured to transmit the first continuous wave signal to the reflector for the reflector to perform frequency conversion on the first continuous wave signal to obtain a first measurement value; and
the initiator is configured to receive a second continuous wave signal sent by the reflector, perform frequency conversion on the second continuous wave signal via a first digital mixer to obtain a second measurement value, where a distance between the initiator and the reflector is determined using a product of the first measurement value and the second measurement value, and the first digital mixer and the first modulation signal use the same signal source.

In a fourth aspect, a reflector is provided, applicable to the Bluetooth ranging apparatus that further includes an initiator.

The reflector is configured to receive a third continuous wave signal sent by the initiator, and perform frequency conversion on the third continuous wave signal via a second digital mixer to obtain a third measurement value;
the reflector is configured to mix a single-tone signal with a second modulation signal to obtain a second intermediate signal;
the reflector is configured to convert the second intermediate signal into a second analog signal;
the reflector is configured to perform frequency conversion on the second analog signal to obtain a fourth continuous wave signal; and
the reflector is configured to transmit the fourth continuous wave signal to the initiator for the initiator to perform frequency conversion on the fourth continuous wave signal to obtain a fourth measurement value, where a distance between the initiator and the reflector is determined using a product of the third measurement value and the fourth measurement value, and the second digital mixer and the second modulation signal use the same signal source.

In a fifth aspect, a computer-readable storage medium is provided. The computer-readable storage medium has stored thereon a program, where when the program is executed by a processor, the processor is caused to perform the Bluetooth ranging method according to any one of the above embodiments.

According to the Bluetooth ranging method provided in the embodiments of the present disclosure, a single-tone signal is mixed with a first modulation signal in the digital domain of the initiator, and the first modulation signal and the first digital mixer of the initiator share the same signal source, so that when calculating the product of the first measurement value and the second measurement value, phase jumps caused by frequency switching of the phase-locked loop can be compensated for to a certain extent, thereby achieving more accurate Bluetooth ranging.

Other advantages of the present disclosure will be explained in more detail with reference to the following description and accompanying drawings.

It should be understood that the foregoing description is merely a general overview of the technical solutions of the present disclosure for facilitating a clearer understanding of the technical principles, such that the disclosure may be implemented in accordance with the teachings herein. To make the above and other objects, features, and advantages of the present disclosure more apparent and understandable, specific embodiments are described in detail below.

### BRIEF DESCRIPTION OF THE DRAWINGS

By reading the detailed description of the exemplary embodiments below, those skilled in the art will understand the advantages and benefits described herein as well as other advantages and benefits. The drawings are only for the purpose of illustrating the exemplary embodiments and are not to be considered as limiting the present disclosure. In the drawings:
FIG. 1 is a schematic flowchart of a Bluetooth ranging method according to an embodiment of the present disclosure;
FIG. 2 is a schematic flowchart of another Bluetooth ranging method according to an embodiment of the present disclosure;
FIG. 3 is a schematic diagram of an initiator according to an embodiment of the present disclosure;
FIG. 4 is a schematic diagram of a reflector according to an embodiment of the present disclosure;

In the drawings, the same or corresponding reference numerals denote the same or corresponding parts.

### DETAILED DESCRIPTION

Exemplary embodiments of the present disclosure will be described in greater detail below with reference to the accompanying drawings. While the drawings illustrate exemplary embodiments, it should be understood that the present disclosure may be embodied in various forms and should not be construed as limited to the specific embodiments set forth herein. Rather, these embodiments are provided so that this disclosure will be thorough and complete, and will fully convey the scope of the disclosure to those skilled in the art.

In the description of the embodiments of the present disclosure, it should be understood that terms such as "including" or "having" are intended to indicate the presence of the disclosed features, numbers, steps, acts, components, parts, or combinations thereof in this specification, and do not preclude the possibility of the presence of one or more other features, numbers, steps, acts, components, parts, or combinations thereof.

Unless otherwise specified, "/" means "or". For example, A/B may mean A or B. "and/or" in this document is merely an association relationship describing associated objects, indicating that three relationships may exist. For example, A and/or B may indicate three cases: A alone, A and B together, and B alone.

The terms "first", "second", etc. are used merely to distinguish similar or identical technical features for ease of description, and should not be construed as indicating or implying relative importance or quantity. Thus, a feature defined as "first", "second", etc. may explicitly or implicitly include one or more of that feature. In the description of the embodiments of the present disclosure, unless otherwise specified, the term "plurality" means two or more than two.

It should be noted that the embodiments of the present disclosure and the features therein may be combined with each other unless the context clearly dictates otherwise. The present disclosure will be described in detail below with reference to the drawings and in conjunction with specific implementations.

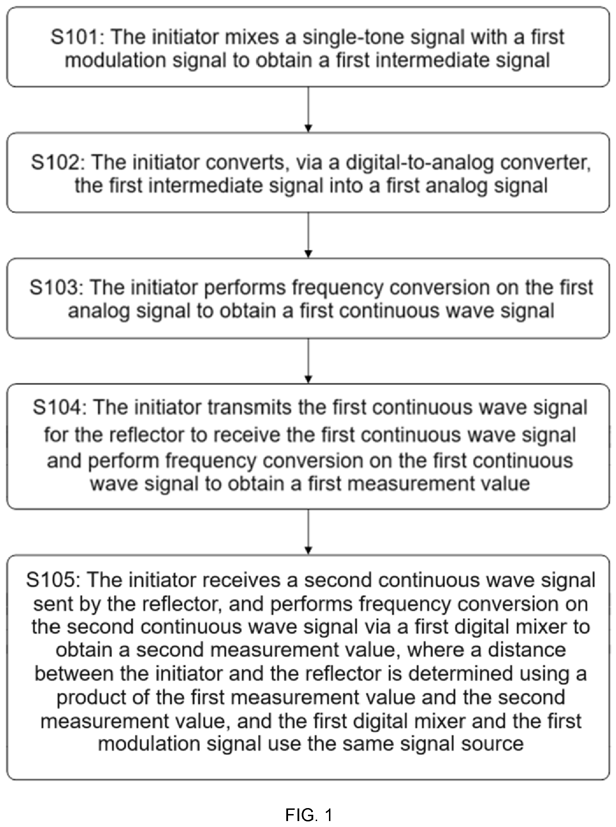

The Bluetooth ranging method provided in the embodiments of the present disclosure is applicable to an initiator of a Bluetooth ranging apparatus that further includes a reflector. As shown in FIG. 1, the Bluetooth ranging method provided in the embodiments of the present disclosure includes:
S101: The initiator mixes a single-tone signal with a first modulation signal to obtain a first intermediate signal.
S102: The initiator converts, via a digital-to-analog converter, the first intermediate signal into a first analog signal.
S103: The initiator performs frequency conversion on the first analog signal to obtain a first continuous wave signal.

It should be noted that the initiator in the embodiments of the present disclosure includes a special low-intermediate-frequency transmitter, which is configured to generate and transmit the first continuous wave signal. Specifically, the low-intermediate-frequency transmitter in the present disclosure may include a digital mixer and a zero-intermediate-frequency transmitter. The digital mixer mixes the single-tone signal with the first modulation signal to obtain the first intermediate signal. The zero-intermediate-frequency transmitter converts, via the digital-to-analog converter, the first intermediate signal into the first analog signal, and performs frequency conversion on the first analog signal to obtain the first continuous wave signal. Specifically, in the embodiments of the present disclosure, the first continuous wave signal is expressed as exp(j(2π(Frx+Fif)(t-T1)+α+γ))=exp(j(2πFtx(t-T1)+α+γ)).

S104: The initiator transmits the first continuous wave signal to the reflector for the reflector to perform frequency conversion on the first continuous wave signal to obtain a first measurement value.

The first measurement value PCT1 is calculated as: 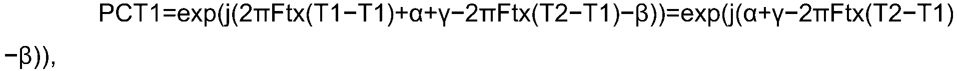 PCT1=exp(j(2πFtx(T1-T1)+α+γ-2πFtx(T2-T1)-β))=exp(j(α+γ-2πFtx(T2-T1) -β)),

where Frx denotes an operating frequency of a phase-locked loop of the initiator, Ftx denotes an operating frequency of a phase-locked loop of the reflector, Fif denotes a frequency of the first modulation signal, with Fif+Frx=Ftx, t denotes a time variable, T1 denotes a time when the initiator transmits the first continuous wave signal, T2 denotes a time when the reflector receives the first continuous wave signal, α denotes a phase of the initiator at time T1, γ denotes a phase of the first modulation signal at time T1, and β denotes a phase of the reflector at time T1.

S105: The initiator receives a second continuous wave signal sent by the reflector, and performs frequency conversion on the second continuous wave signal via a first digital mixer to obtain a second measurement value, where a distance between the initiator and the reflector is determined using a product of the first measurement value and the second measurement value, and the first digital mixer and the first modulation signal use the same signal source.

In the embodiments of the present disclosure, the second continuous wave signal may be expressed as exp(j(β+2πFtx(t-T1))).

The second measurement value PCT2 is calculated as: 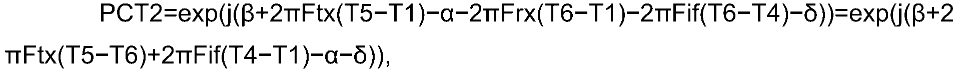 PCT2=exp(j(β+2πFtx(T5-T1)-α-2πFrx(T6-T1)-2πFif(T6-T4)-δ))=exp(j(β+2 πFtx(T5-T6)+2πFif(T4-T1)-α-δ)),
where T4 denotes a time when the initiator switches to a receiving state, T5 denotes a time when the reflector starts to transmit the second continuous wave signal, T6 denotes a time when the initiator receives the second continuous wave signal, and δ denotes a phase of the first digital mixer of the initiator at time T4.

In the embodiments of the present disclosure, the product PCT1*PCT2 of the first measurement value PCT1 and the second measurement value PCT2 may be calculated as: 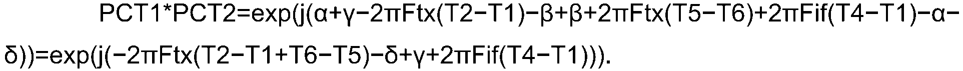 PCT1*PCT2=exp(j(α+γ-2πFtx(T2-T1)-β+β+2πFtx(T5-T6)+2πFif(T4-T1)-α-δ))=exp(j(-2πFtx(T2-T1+T6-T5)-δ+γ+2πFif(T4-T1))).

Since the first digital mixer and the first modulation signal use the same signal source, -δ+γ+2πFif(T4-T1)=0. Therefore, PCT1*PCT2=exp(j(-2πFtx(T2-T1+T6-T5))). The Bluetooth ranging method provided in the present disclosure, when calculating the product of the first measurement value and the second measurement value, can compensate for phase jumps caused by frequency switching of the phase-locked loop to a certain extent, thereby achieving more accurate Bluetooth ranging. Each of T2-T1 and T6-T5 represents a time of flight corresponding to the distance, and the distance between the initiator and the reflector can be determined based on the time of flight.

According to the Bluetooth ranging method provided in the embodiments of the present disclosure, a single-tone signal is mixed with a first modulation signal in the digital domain of the initiator, and the first modulation signal and the first digital mixer of the initiator share the same signal source, so that when calculating the product of the first measurement value and the second measurement value, phase jumps caused by frequency switching of the phase-locked loop can be compensated for to a certain extent, thereby achieving more accurate Bluetooth ranging.

In the embodiments of the present disclosure, the initiator includes a low-intermediate-frequency transmitter and a low-intermediate-frequency receiver. The low-intermediate-frequency transmitter is configured to transmit the first continuous wave signal, and the low-intermediate-frequency receiver is configured to receive the second continuous wave signal. It has been observed that part of the error in Bluetooth ranging originates from the internal circuit of the initiator. To compensate for this error, the low-intermediate-frequency transmitter of the initiator may transmit a test continuous wave signal to the low-intermediate-frequency receiver of the initiator (the transmission frequency of the low-intermediate-frequency transmitter and the reception frequency of the low-intermediate-frequency receiver may be kept the same), and the low-intermediate-frequency receiver can determine the ranging error caused by the internal circuit of the initiator based on the received test continuous wave signal.

In some possible embodiments, in the Bluetooth ranging method provided in the embodiments of the present disclosure, after obtaining the first measurement value and the second measurement value, the initiator may further correct the product of the first measurement value and the second measurement value based on a preset value to obtain a corrected product, and the corrected product is used to determine the distance between the initiator and the reflector. It should be noted that the preset value is determined by the low-intermediate-frequency receiver of the initiator based on a test continuous wave signal received from the low-intermediate-frequency transmitter of the initiator.

Specifically, the preset value in certain embodiments of the present disclosure may be determined based on a channel on which the first measurement value and the second measurement value are obtained. It has been observed that the measurement error caused by the internal circuit of the initiator varies with the channel used for signal transmission and reception. Therefore, in some embodiments of the present disclosure, preset values for multiple channels may be measured in advance, and then the preset value to be used for correcting the product of the first measurement value and the second measurement value may be determined based on the channel used during actual ranging. In this way, by using the determined preset value, the product of the first measurement value and the second measurement value can be further corrected, compensating for errors caused by the internal circuit to a certain extent, thereby achieving more accurate Bluetooth ranging.

In summary, according to the Bluetooth ranging method provided in the embodiments of the present disclosure, a single-tone signal is mixed with a first modulation signal in the digital domain of the initiator, and the first modulation signal and the first digital mixer of the initiator share the same signal source, so that when calculating the product of the first measurement value and the second measurement value, phase jumps caused by frequency switching of the phase-locked loop can be compensated for to a certain extent, thereby achieving more accurate Bluetooth ranging. In addition, the product of the first measurement value and the second measurement value are further corrected using the preset value measured in advance, compensating for errors caused by the internal circuit to a certain extent, thereby achieving more accurate Bluetooth ranging.

Based on the Bluetooth ranging method implemented on the initiator according to the above embodiments, the present disclosure further provides a Bluetooth ranging method implemented on a reflector.

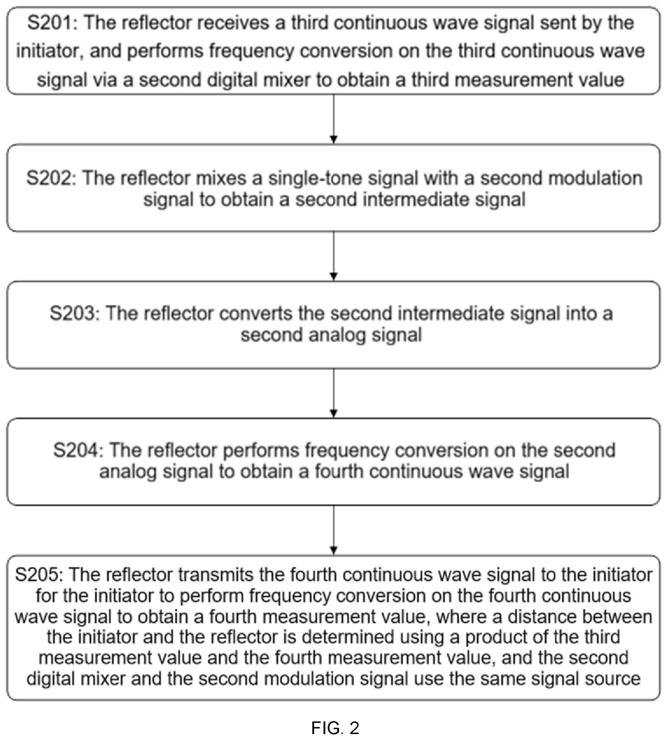

The Bluetooth ranging method provided in the embodiments of the present disclosure is applicable to a reflector of a Bluetooth ranging apparatus that further includes an initiator. As shown in FIG. 2, the method includes:
S201: The reflector receives a third continuous wave signal sent by the initiator, and performs frequency conversion on the third continuous wave signal via a second digital mixer to obtain a third measurement value.

In the embodiments of the present disclosure, the third continuous wave signal is expressed as exp(j(2πFtx'(t-t1)+α')). The third measurement value PCT3 may be calculated as: 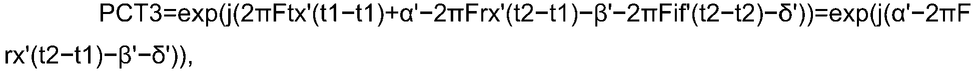 PCT3=exp(j(2πFtx'(t1-t1)+α'-2πFrx'(t2-t1)-β'-2πFif'(t2-t2)-δ'))=exp(j(α'-2πF rx'(t2-t1)-β'-δ')),
where Ftx' denotes an operating frequency of a phase-locked loop of the initiator, Frx' denotes an operating frequency of a phase-locked loop of the reflector, Fif' denotes a frequency of the second modulation signal, with Fif+Frx'=Ftx', t denotes a time variable, t1 denotes a time when the initiator transmits the third continuous wave signal, t2 denotes a time when the reflector receives the third continuous wave signal, α' denotes a phase of the initiator at time t1, β' denotes a phase of the reflector at time t1, and δ' denotes a phase of the second digital mixer at time t2.

S202: The reflector mixes a single-tone signal with a second modulation signal to obtain a second intermediate signal.

S203: The reflector converts the second intermediate signal into a second analog signal.

S204: The reflector performs frequency conversion on the second analog signal to obtain a fourth continuous wave signal.

S205: The reflector transmits the fourth continuous wave signal to the initiator for the initiator to perform frequency conversion on the fourth continuous wave signal to obtain a fourth measurement value, where a distance between the initiator and the reflector is determined using a product of the third measurement value and the fourth measurement value, and the second digital mixer and the second modulation signal use the same signal source.

In the embodiments of the present disclosure, the fourth continuous wave signal is expressed as exp(j(β'+2πFrx'(t-t1)+γ'+2πFif'(t-t5)));
the fourth measurement value PCT4 is calculated as: 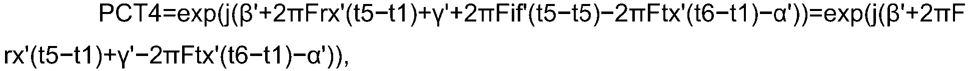 PCT4=exp(j(β'+2πFrx'(t5-t1)+γ'+2πFif'(t5-t5)-2πFtx'(t6-t1)-α'))=exp(j(β'+2πF rx'(t5-t1)+γ'-2πFtx'(t6-t1)-α')),
where t5 denotes a time when the reflector starts to transmit the fourth continuous wave signal, t6 denotes a time when the initiator receives the fourth continuous wave signal, and γ' denotes a phase of the second modulation signal at time t5.

In the embodiments of the present disclosure, the product PCT3*PCT4 of the third measurement value PCT3 and the fourth measurement value PCT4 may be calculated as: 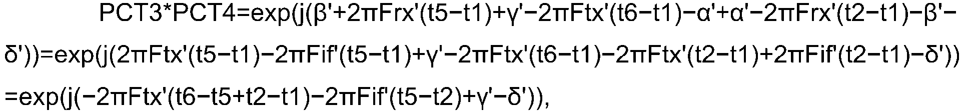 PCT3*PCT4=exp(j(β'+2πFrx'(t5-t1)+γ'-2πFtx'(t6-t1)-α'+α'-2πFrx'(t2-t1)-β'-δ'))=exp(j(2πFtx'(t5-t1)-2πFif'(t5-t1)+γ'-2πFtx'(t6-t1)-2πFtx'(t2-t1)+2πFif'(t2-t1)-δ')) =exp(j(-2πFtx'(t6-t5+t2-t1)-2πFif'(t5-t2)+γ'-δ')),
where each of t2-t1 and t6-t5 represents a time of flight corresponding to the distance. Since the second digital mixer and the second modulation signal use the same signal source, -δ'+y'-2πFif'(t5-t2)=0.

Therefore, PCT3*PCT4=exp(j(-2πFtx'(t6-t5+t2-t1))). Accordingly, in the Bluetooth ranging method provided in the present disclosure, when calculating the product of the third measurement value and the fourth measurement value, phase jumps caused by frequency switching of the phase-locked loop can be compensated for to a certain extent, thereby achieving more accurate Bluetooth ranging.

As a possible implementation, in the embodiments of the present disclosure, the reflector includes a reflector transmitter and a low-intermediate-frequency receiver.

The reflector corrects the product of the third measurement value and the fourth measurement value based on a preset value to obtain a corrected product, and the corrected product is used to determine the distance between the initiator and the reflector; the preset value is determined by the low-intermediate-frequency receiver based on a test continuous wave signal received from the reflector transmitter. The low-intermediate-frequency transmitter and the low-intermediate-frequency receiver of the reflector in the embodiments of the present disclosure are similar to those of the initiator in the above embodiments, and will not be described in detail herein.

It should be noted that the Bluetooth ranging method implemented on the reflector in the embodiments of the present disclosure can implement the various processes of the above embodiments of the Bluetooth ranging method implemented on the initiator, and achieve the same effects and functions, which will not be repeated here.

Reference throughout this specification to "some possible implementations", "some implementations", "an example", "a specific example", or "some examples" means that a particular feature, structure, material, or characteristic described in connection with the implementation or example is included in at least one implementation or example of the present disclosure. Thus, the appearances of the above terms in various places throughout this specification are not necessarily all referring to the same implementation or example. Furthermore, the particular features, structures, materials, or characteristics may be combined in any suitable manner in one or more implementations or examples. Moreover, it will be apparent to those skilled in the art that different implementations or examples, as well as features thereof described herein, may be mutually combined or integrated provided that such combinations are not technically contradictory.

Regarding the flowcharts illustrated in the embodiments of the present disclosure, certain operations are depicted as discrete steps performed in a specific order. However, such flowcharts are intended to be illustrative and non-limiting. It should be understood that certain steps described herein may be combined and performed in a single operation, or a single step may be decomposed into multiple sub-steps. Furthermore, the steps may be performed in an order different from that illustrated. The various steps shown in the flowcharts may be implemented in any suitable manner, including by various circuit structures and/or physical mechanisms (e.g., software executed on a computing device, hardware logic implemented via a processor or chip, etc., or any combination thereof).

Those skilled in the art will further appreciate that the order of steps as recited in the methods of the present disclosure does not necessarily imply a strict execution sequence; the specific order of performance should be determined based on the functional requirements and inherent logic of the steps.

Based on the Bluetooth ranging method provided in the above embodiments, the present disclosure further provides an initiator.

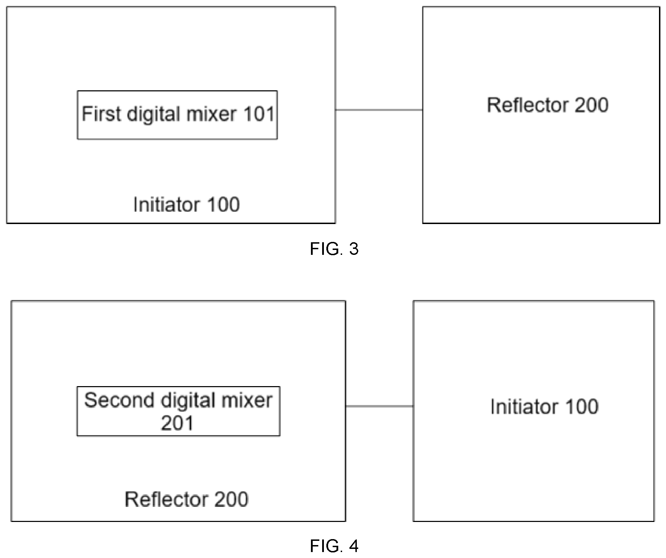

As shown in FIG. 3, an initiator 100 is applicable to a Bluetooth ranging apparatus that further includes a reflector 200.
The initiator 100 is configured to mix a single-tone signal with a first modulation signal to obtain a first intermediate signal;
the initiator 100 is configured to convert, via a digital-to-analog converter, the first intermediate signal into a first analog signal;
the initiator 100 is configured to perform frequency conversion on the first analog signal to obtain a first continuous wave signal;
the initiator 100 is configured to transmit the first continuous wave signal to the reflector 200 for the reflector 200 to perform frequency conversion on the first continuous wave signal to obtain a first measurement value; and
the initiator 100 is configured to receive a second continuous wave signal sent by the reflector, perform frequency conversion on the second continuous wave signal via a first digital mixer 101 to obtain a second measurement value, and determine a distance between the initiator 100 and the reflector 200 using a product of the first measurement value and the second measurement value, where the first digital mixer 101 and the first modulation signal use the same signal source.

It should be noted that the initiator in the embodiments of the present disclosure can implement the various processes of the above method embodiments, and achieve the same effects and functions, which will not be repeated here.

Based on the Bluetooth ranging method provided in the above embodiments, the present disclosure further provides a reflector.

As shown in FIG. 4, a reflector 200 is applicable to a Bluetooth ranging apparatus that further includes an initiator 100.
The reflector 200 is configured to receive a third continuous wave signal sent by the initiator 100, and perform frequency conversion on the third continuous wave signal via a second digital mixer 201 to obtain a third measurement value;
the reflector 200 is configured to mix a single-tone signal with a second modulation signal to obtain a second intermediate signal;
the reflector 200 is configured to convert the second intermediate signal into a second analog signal;
the reflector 200 is configured to perform frequency conversion on the second analog signal to obtain a fourth continuous wave signal;
the reflector 200 is configured to transmit the fourth continuous wave signal to the initiator 100 for the initiator 100 to perform frequency conversion on the fourth continuous wave signal to obtain a fourth measurement value; and
the reflector 200 is configured to determine a distance between the initiator 100 and the reflector 200 using a product of the third measurement value and the fourth measurement value, where the second digital mixer 201 and the second modulation signal use the same signal source.

It should be noted that the reflector in the embodiments of the present disclosure can implement the various processes of the above method embodiments, and achieve the same effects and functions, which will not be repeated here.

According to some embodiments of the present disclosure, a non-volatile computer storage medium for Bluetooth ranging method that has computer-executable instructions stored thereon is provided. The computer-executable instructions, when executed by a processor (for example, a multi-core processor), cause the processor to perform the methods described in the above embodiments.

Computer-readable media include both permanent and non-permanent, removable and non-removable media, and information storage may be implemented by any method or technology. The information may be computer-readable instructions, data structures, program modules, or other data. Examples of computer-readable storage media include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, CD-ROM, digital versatile discs (DVD) or other optical storage, magnetic cassettes, magnetic tape, magnetic disk storage or other magnetic storage devices, or any other non-transmission medium that may be used to store information that can be accessed by a computing device. Additionally, although the operations of the methods of the present disclosure are depicted in a particular order in the drawings, this does not require or imply that the operations must be performed in that particular order, or that all illustrated operations must be performed to achieve desirable results. Rather, certain steps may be omitted, multiple steps may be combined into one step for execution, and/or one step may be divided into multiple sub-steps for execution.

Although the spirit and principles of the present disclosure have been described above with reference to several specific embodiments, it should be understood that the present disclosure is not limited to the disclosed specific embodiments, and the division of various aspects does not mean that features in these aspects cannot be combined. The present disclosure is intended to cover various modifications and equivalent arrangements included within the spirit and scope of the appended claims.

## Claims

1. A method of Bluetooth ranging, applicable to an initiator of a Bluetooth ranging apparatus that further comprises a reflector, the method comprising:
mixing, by the initiator, a single-tone signal with a first modulation signal to obtain a first intermediate signal;
converting, by the initiator via a digital-to-analog converter, the first intermediate signal into a first analog signal;
performing, by the initiator, frequency conversion on the first analog signal to obtain a first continuous wave signal;
transmitting, by the initiator, the first continuous wave signal to the reflector for the reflector to perform frequency conversion on the first continuous wave signal to obtain a first measurement value; and
receiving, by the initiator, a second continuous wave signal sent by the reflector, and performing frequency conversion on the second continuous wave signal via a first digital mixer to obtain a second measurement value, wherein a distance between the initiator and the reflector is determined using a product of the first measurement value and the second measurement value, and the first digital mixer and the first modulation signal use a same signal source.

2. The method according to claim 1, wherein the initiator comprises a low-intermediate-frequency transmitter and an initiator receiver, and the method further comprises:
correcting, by the initiator, the product of the first measurement value and the second measurement value based on a preset value to obtain a corrected product, wherein the corrected product is used to determine the distance between the initiator and the reflector;
wherein the preset value is determined by the initiator receiver based on a test continuous wave signal received from the low-intermediate-frequency transmitter.

3. The method according to claim 1, wherein the first continuous wave signal is expressed as exp(j(2π(Frx+Fif)(t-T1)+α+γ))=exp(j(2πFtx(t-T1)+α+γ)); and
the first measurement value is calculated as PCT1=exp(j(2πFtx(T1-T1)+α+γ-2πFtx(T2-T1)-β))=exp(j(α+γ-2πFtx(T2-T1)-β)),
wherein Frx denotes an operating frequency of a phase-locked loop of the initiator, Ftx denotes an operating frequency of a phase-locked loop of the reflector, Fif denotes a frequency of the first modulation signal, with Fif+Frx=Ftx, t denotes a time variable, T1 denotes a time when the initiator transmits the first continuous wave signal, T2 denotes a time when the reflector receives the first continuous wave signal, α denotes a phase of the initiator at time T1, γ denotes a phase of the first modulation signal at time T1, and β denotes a phase of the reflector at time T1.

4. The method according to claim 3, wherein the second continuous wave signal is expressed as exp(j(β+2πFtx(t-T1))); and
the second measurement value is calculated as PCT2=exp(j(β+2πFtx(T5-T1)-α-2πFrx(T6-T1)-2πFif(T6-T4)-δ))=exp(j(β+2πFtx(T5-T6)+2πFif(T4-T1)-α-δ)),
wherein T4 denotes a time when the initiator switches to a receiving state, T5 denotes a time when the reflector starts to transmit the second continuous wave signal, T6 denotes a time when the initiator receives the second continuous wave signal, and δ denotes a phase of the first digital mixer of the initiator at time T4.

5. The method according to claim 4, wherein the product of the first measurement value and the second measurement value is calculated as PCT1*PCT2=exp(j(α+γ-2πFtx(T2-T1)-β+β+2πFtx(T5-T6)+2πFif(T4-T1)-α-δ))=exp(j (-2πFtx(T2-T1+T6-T5)-δ+γ+2πFif(T4-T1))),
wherein each of T2-T1 and T6-T5 represents a time of flight corresponding to the distance, and -δ+γ+2πFif(T4-T1)=0.

6. A method of Bluetooth ranging, applicable to a reflector of a Bluetooth ranging apparatus that further comprises an initiator, the method comprising:
receiving, by the reflector, a third continuous wave signal sent by the initiator, and performing frequency conversion on the third continuous wave signal via a second digital mixer to obtain a third measurement value;
mixing, by the reflector, a single-tone signal with a second modulation signal to obtain a second intermediate signal;
converting, by the reflector, the second intermediate signal into a second analog signal;
performing, by the reflector, frequency conversion on the second analog signal to obtain a fourth continuous wave signal; and
transmitting, by the reflector, the fourth continuous wave signal to the initiator for the initiator to perform frequency conversion on the fourth continuous wave signal to obtain a fourth measurement value, wherein a distance between the initiator and the reflector is determined using a product of the third measurement value and the fourth measurement value, and the second digital mixer and the second modulation signal use a same signal source.

7. The method according to claim 6, wherein the reflector comprises a reflector transmitter and a low-intermediate-frequency receiver, the method further comprising:
correcting, by the reflector, the product of the third measurement value and the fourth measurement value based on a preset value to obtain a corrected product, wherein the corrected product is used to determine the distance between the initiator and the reflector;
wherein the preset value is determined by the low-intermediate-frequency receiver based on a test continuous wave signal received from the reflector transmitter.

8. The method according to claim 6, wherein the third continuous wave signal is expressed as exp(j(2πFtx'(t-t1)+α')); and
the third measurement value PCT3 is calculated as PCT3=exp(j(2πFtx'(t1-t1)+α'-2πFrx'(t2-t1)-β'-2πFif'(t2-t2)-δ'))=exp(j(α'-2πFrx'(t2-t1 )-β'-δ')),
wherein Ftx' denotes an operating frequency of a phase-locked loop of the initiator, Frx' denotes an operating frequency of a phase-locked loop of the reflector, Fif' denotes a frequency of the second modulation signal, with Fif'+Frx'=Ftx', t denotes a time variable, t1 denotes a time when the initiator transmits the third continuous wave signal, t2 denotes a time when the reflector receives the third continuous wave signal, α' denotes a phase of the initiator at time t1, β' denotes a phase of the reflector at time t1, and δ' denotes a phase of the second digital mixer at time t2.

9. The method according to claim 8, wherein the fourth continuous wave signal is expressed as exp(j(β'+2πFrx'(t-t1)+γ'+2πFif'(t-t5))); and
the fourth measurement value PCT4 is calculated as PCT4=exp(j(β'+2πFrx'(t5-t1)+γ'-2πFtx'(t6-t1)-α')),
wherein t5 denotes a time when the reflector starts to transmit the fourth continuous wave signal, t6 denotes a time when the initiator receives the fourth continuous wave signal, and γ' denotes a phase of the second modulation signal at time t5.

10. The method according to claim 9, wherein the product of the third measurement value and the fourth measurement value is calculated as PCT3*PCT4=exp(j(β'+2πFrx'(t5-t1)+y'-2πFtx'(t6-t1)-α'+α'-2πFrx'(t2-t1)-β'-δ'))=exp(j (2πFtx'(t5-t1)-2πFif'(t5-t1)+γ'-2πFtx'(t6-t1)-2πFtx'(t2-t1)+2πFif'(t2-t1)-δ'))=exp(j(-2 πFtx'(t6-t5+t2-t1)-2πFif'(t5-t2)+γ'-δ')),
wherein each of t2-t1 and t6-t5 represents a time of flight corresponding to the distance, and -δ'+γ'-2πFif'(t5-t2)=0.

11. An initiator, applicable to a Bluetooth ranging apparatus that further comprises a reflector;
wherein the initiator is configured to mix a single-tone signal with a first modulation signal to obtain a first intermediate signal;
the initiator is configured to convert, via a digital-to-analog converter, the first intermediate signal into a first analog signal;
the initiator is configured to perform frequency conversion on the first analog signal to obtain a first continuous wave signal;
the initiator is configured to transmit the first continuous wave signal to the reflector for the reflector to perform frequency conversion on the first continuous wave signal to obtain a first measurement value; and
the initiator is configured to receive a second continuous wave signal sent by the reflector and perform frequency conversion on the second continuous wave signal via a first digital mixer to obtain a second measurement value, wherein a distance between the initiator and the reflector is determined using a product of the first measurement value and the second measurement value, and the first digital mixer and the first modulation signal use a same signal source.

12. The initiator according to claim 11, wherein the initiator comprises a low-intermediate-frequency transmitter and an initiator receiver, and the initiator is further configured to correct the product of the first measurement value and the second measurement value based on a preset value to obtain a corrected product, wherein the corrected product is used to determine the distance between the initiator and the reflector;
wherein the preset value is determined by the initiator receiver based on a test continuous wave signal received from the low-intermediate-frequency transmitter.

13. A reflector, applicable to a Bluetooth ranging apparatus that further comprises an initiator;
wherein the reflector is configured to receive a third continuous wave signal sent by the initiator, and perform frequency conversion on the third continuous wave signal via a second digital mixer to obtain a third measurement value;
the reflector is configured to mix a single-tone signal with a second modulation signal to obtain a second intermediate signal;
the reflector is configured to convert the second intermediate signal into a second analog signal;
the reflector is configured to perform frequency conversion on the second analog signal to obtain a fourth continuous wave signal; and
the reflector is configured to transmit the fourth continuous wave signal to the initiator for the initiator to perform frequency conversion on the fourth continuous wave signal to obtain a fourth measurement value, wherein a distance between the initiator and the reflector is determined using a product of the third measurement value and the fourth measurement value, and the second digital mixer and the second modulation signal use a same signal source.

14. The reflector according to claim 13, wherein the reflector comprises a reflector transmitter and a low-intermediate-frequency receiver, and the reflector is further configured to correct the product of the third measurement value and the fourth measurement value based on a preset value to obtain a corrected product, wherein the corrected product is used to determine the distance between the initiator and the reflector;
wherein the preset value is determined by the low-intermediate-frequency receiver based on a test continuous wave signal received from the reflector transmitter.

15. A computer-readable storage medium having stored thereon a program, wherein when the program is executed by a processor, the processor is caused to perform the method according to any one of claims 1-10.
